(19) Europäisches Patentamt
European Patent Office
Office européen des brevets

(11) EP 1 444 895 A1

(12) **EUROPEAN PATENT APPLICATION**

(43) Date of publication:
**11.08.2004 Bulletin 2004/33**

(21) Application number: **04011427.4**

(22) Date of filing: **28.04.1999**

(51) Int Cl.[7]: **A01N 37/52**, A01N 55/00, A01N 43/653

(84) Designated Contracting States:
**DE FR GB**

(30) Priority: **30.04.1998 JP 13608798**
**17.07.1998 JP 21981598**
**17.08.1998 JP 24655298**

(62) Document number(s) of the earlier application(s) in accordance with Art. 76 EPC:
**03005342.5 / 1 319 337**
**99917212.5 / 1 077 028**

(71) Applicant: **NIPPON SODA CO., LTD.**
**Chiyoda-ku, Tokyo 100-8165 (JP)**

(72) Inventors:
- **Wakai, Akira Nisson Green Co., Ltd**
**Tokyo 110-0005 (JP)**
- **Hosokawa, Hiroyasu Nippon Soda Co., Ltd.**
**Haibara-gun Sizuo (JP)**
- **Hamamura, Hiroshi Nippon Soda Co., Ltd.**
**Odawara-shi Kanagawa 250-0216 (JP)**

(74) Representative:
**Wibbelmann, Jobst, Dr., Dipl.-Chem.**
**Wuesthoff & Wuesthoff,**
**Patent- und Rechtsanwälte,**
**Schweigerstrasse 2**
**81541 München (DE)**

Remarks:
This application was filed on 13 - 05 - 2004 as a divisional application to the application mentioned under INID code 62.

# (54) Fungicide composition for agriculture and horticulture

(57) A novel bactericide composition for agriculture and horticulture comprising a benzamidoxime compound and other bactericides, in particular, a bactericide composition which is characterized in that it comprises, as active compounds, a compound represented by general formula (I), wherein $R^1$ represents an optionally substituted $C_{1-4}$ alkyl group or the like, $R^2$ represents an optionally substituted phenyl group or the like, $X^1$ represents a $C_{1-4}$ haloalkyl group or the like, $X^2$-$X^5$ independently represent a hydrogen atom, a halogen atom or the like, $r^1$ and $r^2$ represent a hydrogen atom, $C_{1-4}$ alkyl group or the like, as well as a benzoisothiazole agent, a N-phenyl carbamate agent and an organic phosphorus agent.

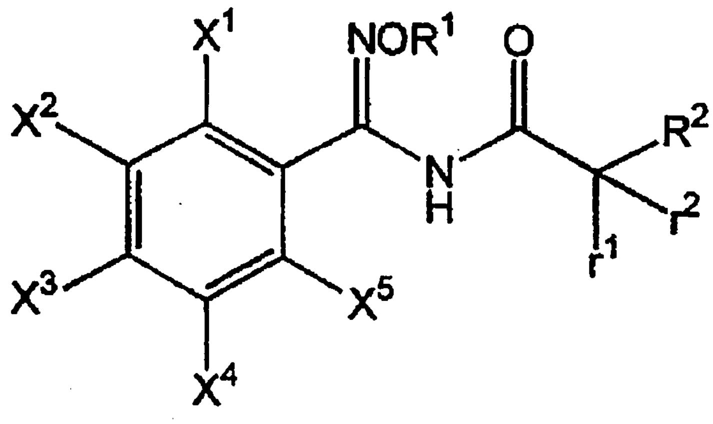

(I)

EP 1 444 895 A1

## Description

This is a divisional application of EP 1 319 337 A1 published on June 18, 2003; the disclosures of which is incorporated herein by reference in its entirety.

Field of Invention

The present invention is related to a fungicidal composition for agricultural and horticultural use, and more particularly to a combined fungicidal composition.

Background Art

Benzamidoxime compounds represented by a general formula (1);

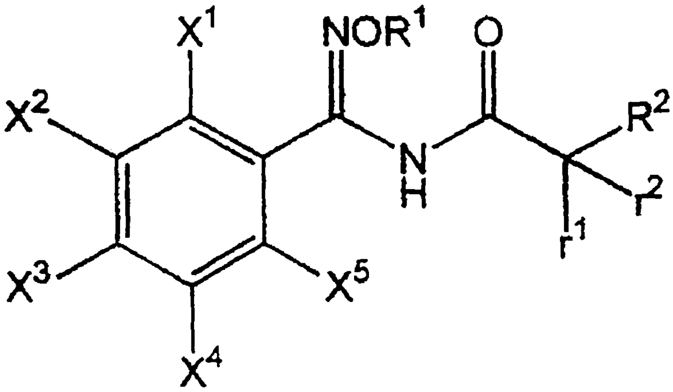

( I )

are the compounds disclosed as having fungicidal activity in JP No. 2696342 gazette, WO No. 96/19442 gazette, JP Laid-open Nos. Hei 235262 gazette and Hei 10-67730 gazette, WO No. 99/14187 gazette, WO No. 99/14188 gazette, etc.

Also, as fungicidal compounds, many compounds, such as benzimidazole compounds, dicarboxyimide compounds, guanidine compounds, acid amide compounds, anilinopyrimidine compounds, cinnamic acid derivatives, benzoisothiazole compounds, N-phenylcarbamate compounds, organophosphorous compounds and SBI type compounds, have been known. However, no combined fungicidal compositions comprising the compound represented by the general formula (1) and a fungicide selected from a group consisting of benzimidazole compounds, dicarboxyimide compounds, guanidine compounds, acid amide compounds, anilinopyrimidine compounds, cinnamic acid derivatives, benzoisothiazole compounds, N-phenylcarbamate compounds, organophosphorous compounds and SBI type compounds showing to have the synergistic fungicidal activity have been reported.

Disclosure of Invention

It is an object of the present invention to provide a combined fungicidal composition capable of reducing the use dose required for other known fungicides, improving the applicable spectrum range and giving the synergistic activity.

The present invention is directed to a fungicidal composition characterized by containing as the active ingredients a benzamidoxime compound represented by a general formula (I);

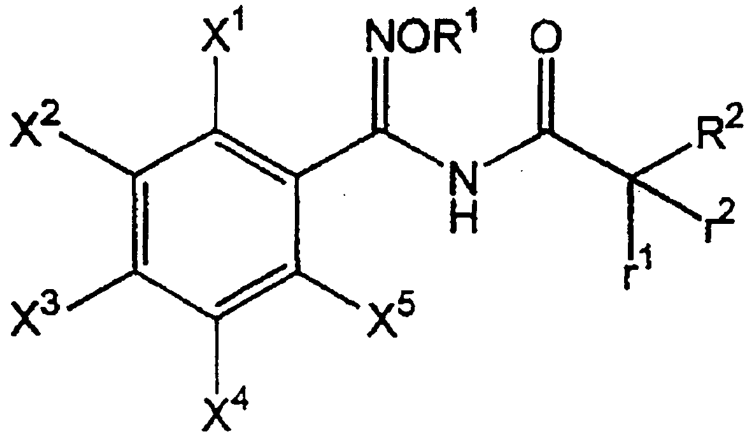

( I )

wherein $R^1$ represents halogeno, $C_{1-4}$ alkyl optionally-substituted with $C_{3-5}$ cycloalkyl, $C_{2-4}$ alkenyl optionally-substituted with halogeno or $C_{2-4}$, alkynyl optionally-substituted with halogeno,

$R^2$ represents phenyl optionally-substituted with halogeno, $C_{1-4}$ alkyl or $C_{1-4}$ alkoxy, or a heterocyclic ring optionally-substituted with halogeno, $C_{1-4}$ alkyl or $C_{1-4}$ alkoxy,

X1 represents halogeno, $C_{1-4}$ haloalkyl or $C_{1-4}$ haloalkoxy,

X2, X3, X4 and X5 represent each independently hydrogen, nitro, amino, halogeno, $C_{1-4}$ alkyl, $C_{1-4}$ haloalkyl, $C_{1-4}$ alkoxy, $C_{1-4}$ haloalkoxy, $C_{1-4}$ alkylthio, $C_{1-4}$ alkylsulfinyl, $C_{1-4}$ alkylsulfonyl or $C_{1-4}$ alkylcarbonylamino,

$r^1$ and $r^2$ represent each independently hydrogen, amino, halogeno, $C_{1-4}$ alkyl, $C_{1-4}$ haloalkyl, $C_{1-4}$ alkoxy or $C_{1-4}$ alkylthio, or $r^1$ and $r^2$ may form in together a carbonyl group, and one or more compounds selected from a group consisting of benzimidazole compounds, dicarboxyimide compounds, guanidine compounds, acid amide compounds, anilinopyrimidine compounds, cinnamic acid derivatives, benzoisothiazole compounds, N-phenylcarbamate compounds, organophosphorous compounds and SBI type compounds.

The benzamidoxime compound used for the present invention is a compound represented by the general formula (I), and one or more of the benzamidoxime compounds can be used as the active ingredients for the fungicidal composition according to the present invention.

As the examples for the group represented by $R^1$, $C_{1-4}$ alkyl, such as methyl, ethyl, propyl, isopropyl, butyl, isobutyl, s-butyl, t-butyl and cyclopropylmethyl, $C_{2-4}$ alkenyl, such as 2-propenyl, allyl, crotyl, 1-butenyl, 2-butenyl and butadienyl, $C_{2-4}$ alkynyl, such as ethynyl, 1-propynyl, 2-propynyl, 1-butynyl, 2-butynyl, 3-butynyl and propagyl, can be given.

The group represented by $R^1$may be substituted with halogeno, such as fluorine, chlorine, bromine and iodine, or $C_{3-5}$ cycloalkyl, such as cyclopropyl, cyclobutyl and cyclopentyl.

$R^2$ represents phenyl or a heterocyclic ring, such as pyrazolyl and thienyl.

The phenyl or the heterocyclic ring described above may be substituted with halogeno, such as fluorine, chlorine, bromine and iodine, $C_{1-4}$ alkyl, such as methyl, ethyl, propyl, isopropyl, butyl, isobutyl, s-butyl, t-butyl and cyclopropylmethyl, or $C_{1-4}$ alkoxy, such as methoxy, ethoxy, propoxy, isopropoxy, butoxy, isobutoxy, s-butoxy, t-butoxyand cyclopropylmethoxy.

$X^1$ represents halogeno, such as fluorine, chlorine, bromine and iodine, $C_{1-4}$ haloalkyl, such as fluoromethyl, 1-fluoroethyl, 2-fluoroethyl, difluoromethyl, trifluoromethyl and pentafluoroethyl, or $C_{1-4}$ haloalkoxy, such as fluoromethoxy, 1-fluoroethoxy, 2-fluoroethoxy, difluoromethoxy, trifluoromethoxy and pentafluoroethoxy.

$X^2$, $X^3$, $X^4$ and $X^5$ represent each independently hydrogen, nitro, amino, halogeno, such as fluorine, chlorine, bromine and iodine, $C_{1-4}$ alkyl, such as methyl, ethyl, propyl, isopropyl, butyl, s-butyl, t-butyl and cyclopropylmethyl, $C_{1-4}$ haloalkyl, such as fluoromethyl, 1-fluoroethyl, 2-fluoroethyl, difluoromethyl, trifluoromethyl and pentafluoroethyl, $C_{1-4}$ alkoxy, such as methoxy, ethoxy, propoxy, isopropoxy, butoxy, isobutoxy, s-butoxy, t-butoxy and cyclopropylmethoxy, $C_{1-4}$ haloalkoxy, such as fluoromethoxy, 1-fluoroethoxy, 2-fluoroethoxy, difluoromethoxy, trifluoromethoxy and pentafluoroethoxy, $C_{1-4}$ alkylthio, such as methylthio, ethylthio, propylthio and butylthio, $C_{1-4}$ alkylsulfinyl, such as methylsulfinyl and ethylsulfinyl, $C_{1-4}$ alkylsulfonyl, such as methylsulfonyl and ethylsulfonyl, or $C_{1-4}$ alkylcarbonylamino, such as methylcarbonylamino and ethylcarbonylamino.

$r^1$ and $r^2$ represent each independently hydrogen, amino, halogeno, such as fluorine, chlorine, bromine and iodine, $C_{1-4}$ alkyl, such as methyl, ethyl, propyl, isopropyl, butyl, isobutyl, s-butyl, t-butyl and cyclopropylmethyl, $C_{1-4}$ haloalkyl, such as fluoromethyl, 1-fluoroethyl, 2-fluoroethyl, difluoromethyl, trifluoromethyl and pentafluoroethyl, $C_{1-4}$ alkoxy, such as methoxy, ethoxy, propoxy, isopropoxy, butoxy, isobutoxy, s-butoxy, t-butoxy and cyclopropylmethoxy,

or $C_{1-4}$ alkylthio, such as methylthio, ethylthio, propylthio and butylthio, and $r^1$ and $r^2$ may form in together carbonyl.

The benzamidoxime compounds used in the present invention are the compounds represented by the general formula (I), and one or more of the benzamidoxime compounds can be used for the fungicidal composition according to the present invention. In Table 1, particularly preferable examples for the benzamidoxime compounds are presented.

Table 1

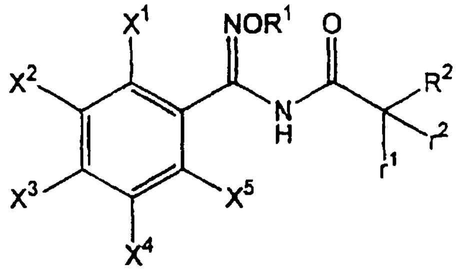

( I )

(r¹, r²=H)

| No. | $X^1$ | $X^2$ | $X^3$ | $X^4$ | $X^5$ | $R^1$ | $R^2$ |
|---|---|---|---|---|---|---|---|
| 1 | $CF_3$ | H | H | F | F | $CH_2$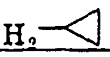 | Ph |
| 2 | $CF_3$ | H | H | Cl | F | $CH_2$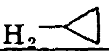 | Ph |
| 3 | $CF_3$ | H | H | F | Cl | $CH_2$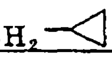 | Ph |
| 4 | $CF_3$ | H | H | Cl | Cl | $CH_2$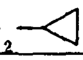 | Ph |
| 5 | $CF_3$ | H | H | F | F | $CH_2$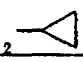 | 2-F-Ph |
| 6 | $CF_3$ | H | H | Cl | F | $CH_2$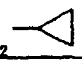 | 2-F-Ph |
| 7 | $CF_3$ | H | H | F | Cl | $CH_2$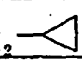 | 2-F-Ph |
| 8 | $CF_3$ | H | H | Cl | Cl | $CH_2$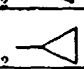 | 2-F-Ph |
| 9 | $CF_3$ | H | H | F | F | $CH_2$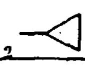 | 2-F-5-Me-Ph |
| 10 | $CF_3$ | H | H | Cl | F | $CH_2$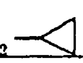 | 2-F-5-Me-Ph |
| 11 | $CF_3$ | H | H | F | Cl | $CH_2$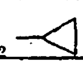 | 2-F-5-Me-Ph |
| 12 | $CF_3$ | H | H | Cl | Cl | $CH_2$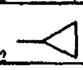 | 2-F-5-Me-Ph |
| 13 | $CF_3$ | H | H | F | F | $CH_2CH_2Cl$ | Ph |
| 14 | $CF_3$ | H | H | Cl | F | $CH_2CH_2Cl$ | Ph |
| 15 | $CF_3$ | H | H | F | Cl | $CH_2CH_2Cl$ | Ph |
| 16 | $CF_3$ | H | H | Cl | Cl | $CH_2CH_2Cl$ | Ph |
| 17 | $CF_3$ | H | H | F | F | $CH_2CH_2Cl$ | 2-F-Ph |
| 18 | $CF_3$ | H | H | Cl | F | $CH_2CH_2Cl$ | 2-F-Ph |
| 19 | $CF_3$ | H | H | F | Cl | $CH_2CH_2Cl$ | 2-F-Ph |

Table 1(Continued)

| | | | | | | | |
|---|---|---|---|---|---|---|---|
| 20 | $CF_3$ | H | H | Cl | Cl | $CH_2CH_2Cl$ | 2-F-Ph |
| 21 | $CF_3$ | H | H | F | F | $CH_2CH_2Cl$ | 2-F-5-Me-Ph |
| 22 | $CF_3$ | H | H | Cl | F | $CH_2CH_2Cl$ | 2-F-5-Me-Ph |
| 23 | $CF_3$ | H | H | F | Cl | $CH_2CH_2Cl$ | 2-F-5-Me-Ph |
| 24 | $CF_3$ | H | H | Cl | Cl | $CH_2CH_2Cl$ | 2-F-5-Me-Ph |
| 25 | $OCHF_2$ | H | H | H | F | $CH_2$ 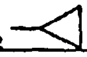 | Ph |
| 26 | $OCHF_2$ | H | H | F | F | $CH_2$ 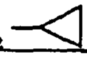 | Ph |
| 27 | $OCHF_2$ | H | H | H | F | $CH_2$ 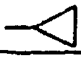 | 4-F-Ph |
| 28 | $OCHF_2$ | H | H | F | F | $CH_2$ 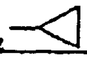 | 4-F-Ph |
| 29 | $OCHF_2$ | H | H | F | F | $CH_2$ 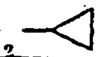 | 4-MeO-Ph |
| 30 | $OCHF_2$ | H | H | Cl | Cl | $CH_2$ 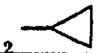 | 4-MeO-Ph |
| 31 | $OCHF_2$ | H | H | H | F | $CH_2CH=CH_2$ | Ph |
| 32 | $OCHF_2$ | H | H | F | F | $CH_2C\equiv CH$ | Ph |
| 33 | $OCF_3$ | H | H | H | F | $CH_2$ 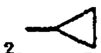 | Ph |
| 34 | $OCF_3$ | H | H | F | F | $CH_2$ 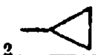 | Ph |
| 35 | Cl | H | H | H | F | $CH_2$ 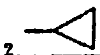 | Ph |
| 36 | Cl | H | H | F | F | $CH_2$ 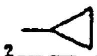 | Ph |
| 37 | Cl | H | H | H | F | $CH_2$ 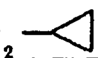 | 4-F-Ph |
| 38 | Cl | H | H | F | F | $CH_2$ 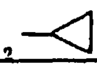 | 4-F-Ph |
| 39 | Cl | H | H | H | F | $CH_2$ 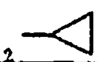 | 4-MeO-Ph |
| 40 | Cl | H | H | F | F | $CH_2$ 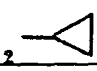 | 4-MeO-Ph |

As examples for the benzimidazole compounds specified in the present invention, thiophanate methyl, benomyl, carbendazim and thiabendazole, are given.

And, iprodione and procymidone are given as examples for the dicarboxyimide compounds, iminoctadine is given as an example for the guanidine compound, carboxin, mepronil, flutolanil, pencycuron, furametopyr and thifluzamide are given as examples for the acid amide compounds, cyprodinil, mepanipyrim and pyrimethanil are given as examples for the anilinopyrimidine compounds, dimethomorph is given as an example for the cinnamic acid derivative, probenazole is given as an example for the benzisothiazole compound, diethofencarb is given as an example for the

N-phenylcarbamate compound, fosetyl is given as an example for the organophosphorous compound, and as SBI type compounds, bromoconazole, cyproconazole, diphenoconazole, fenbuconazole, flusilazole, flutriafol, hexaconazole, propiconazole, tebuconazole, tetraconazole, triadimefon, triadimenol, triflumizole, bitertanol, imibenconazole, diniconazole, fenpropimorph, fenpropidine, tridemorph, epoxyconazole, fluquinconazole, prochloraz and metoconazole are given, and one or more than two compounds of the compounds recited above can be used as the active ingredients for the fungicidal composition according to the present invention.

In the preparation of the fungicidal compounds according to the present invention, the combining rate of the benzamidoxime compound represented by the general formula (I) and a known fungicide selected from a group consisting of benzimidazole compounds, dicarboxyimide compounds, guanidine compounds, acid amide compounds, anilinopyrimidine compounds, cinnamic acid derivatives, benzoisothiazole compounds, N-phenylcarbamate compounds, organophosphorous compounds and SBI type compounds can be freely fixed over a wide range, however, the combining rate is normally in a range of 1:0.01-1,000, and preferably in a rage of 1:1-100.

The fungicidal composition of the present invention is commonly admixed with solid carriers, liquid solvents, gaseous diluents, etc., added with surface active agents and other inert ingredients, if required, and is used in a formulation form, such as oily solution, emulsifiable concentrate, wettable powder, granules, powder, aerosol, suspension, foaming preparation, microcapsules, ULV and paste. In these formulations, the active ingredients as exemplified above are contained at the total content of from 0.1 to 99.9 wt%, and more preferably from 0.2 to 80 wt%.

At the formulation of the fungicidal composition, fine powder and granules including clays, such as kaolinite, diatomaceous earth, synthesized silicon hydroxide, fubasami clay, bentonite and acid clay, talc, and other inorganic minerals, such as sericite, silica powder, sulfur powder, activated carbon and calcium carbonate, are used as the solid carrier used for the formulation, whereas alcohols, such as methanol and ethanol, ketones, such as acetone, methyl ethyl ketone and cyclohexanone, aromatic hydrocarbons, such as toluene, xylene, ethyl benzene and methyl naphthalene, nonaromatic hydrocarbons, such as hexane, cyclohexane and kerosine, esters, such as ethyl acetate and butyl acetate, nitriles, such as acetonitrile and isobutylonitrile, ethers, such as dioxane and diisopropyl ether, acid amides, such as dimethylformamide and dimethylacetamide, halogenated hydrocarbons, such as dichloroethane and trichloroethylene, are used as the liquid solvent for the formulation, and carbon dioxide, butane gas, fluorocarbon, etc. are used as the gaseous diluents, namely spray gas, for the gaseous formulation.

As examples for the surface active agent, alkyl sulfates, alkyl sulfonates, alkyl aryl sulfonates, alkyl aryl ethers and their polyoxyethylenated compounds, polyethyleneglycol ethers, polyhydric alcohol esters, sugar alcohol derivatives and the like are given.

As other inert ingredients to be used for the formulations as described above, a sticking agent and a dispersing agent including casein, gelatin, polysaccharides, such as starch, gum Arabic, cellulose derivatives and alginic acid, ligninic acid derivatives, bentonite, synthesized aqueous polymers, such as polyvinyl alcohol, polyvinyl pyrrolidone and polyacrylic acid, and a stabilizing agent including PAP (acidic isopropyl phosphate), BHT (2,6-di-tert-butyl-4-methylphenol), BHA (2-/3-tert-butyl-4-methoxyphenol), vegetable oil, mineral oil, fatty acids, fatty acid esters, etc. are given.

The prepared formulations containing the fungicidal composition according to the present invention are applied either directly or after diluting them with water or the like to plants, to water surface or to soil. In addition, the formulated fungicidal composition can be used in combination with other fungicides, herbicides, fertilizers and soil conditioners. The applying dose of the fungicidal composition of the present invention varies depending upon the combining ratio of the active ingredients, namely the compound represented by the general formula (I) and any of benzimidazole compounds, dicarboxyimide compounds, guanidine compounds, acid amide compounds, anilinopyrimidine compounds, cinnamic acid derivatives, benzoisothiazole compounds, N-phenylcarbamate compounds and organophosphorous compounds, climatic condition, formulated form, application method, place to apply, objective plant disease and objective crop, however, the applying dose per hectare is normally in a range of from 1 to 1,000 g, and more preferably in a range of from 10 to 100 g. When using any of the emulsifiable concentrate, the suspension, the liquid, or the like of the fungicidal composition after diluting with water, the applying concentration is preferably in a range of from 1 to 1,000 ppm, and more preferably from 10 to 250 ppm. Whereas, the formulations, such as granules and powder, are normally applied directly without dilution.

The combined fungicidal composition according to the present invention is applicable for controlling agriculturally important plant diseases in wide range, and the representative examples for the plant diseases are presented in the following.

| | |
|---|---|
| Paddy Rice | Rice blast (Pyricularia oryzae) |
| | Sheath blight (Rhizoctonia solani) |
| | Bakanae disease (Gibberella fujikuroi) |
| | Helminthosporium leaf spot (Cochilobolus miyabeabeanus) |
| Barley | Loose smut (Ustilago nuda) |
| Wheat | Scab (Gibberella zeae) |

| | |
|---|---|
| | Leaf rust (Puccinia recondite) |
| | Eye spot (Pseudocercosporella herpotrichoides) |
| | Glume blotch (Leptosphaeria nodorum) |
| | Powdery mildew (Erysiphe graminis f.sp.tritici) |
| | Fusarium snow blight (Micronectriella nivalis) |
| Potatoes | Late blight (Phytophthora infestans) |
| Groundnuts | Leaf spot (Mycosphaerella arachidis) |
| Sugarbeets | Cercospora leaf spot (Cercospora beticola) |
| Cucumber | Powdery mildew (Sphaerotheca fuliginea) |
| | Sclerotinia rot (Sclerotinia sclerotiorum) |
| | Gray mold (Botrytis cinerea) |
| | Downy mildew (Pseudoperonospora cubensis) |
| Tomatoes | Leaf mold (Cladosporium fulvum) |
| | Late blight (Phytophthora infestans) |
| Egg plants | Black rot (Corynespora melongenae) |
| Onion | Gray mold (Botrytis allii) |
| Strawberries | Powdery mildew (Sphaerotheca humuli) |
| Apples | Powdery mildew (Podosphaera leucotricha) |
| | Scab (Venturia inaequalis) |
| | Blossom blight (Monilinia mali) |
| Japanese persimmon | Anthracnose (Gloeosporium kaki) |
| Peaches | Brown rot (Monilinia fructicola) |
| Vine trees | Powdery mildew (Uncinula necator) |
| | Downy mildew (Plasmopara viticola) |
| Pears | Rust (Gymnisporangium asiaticum) |
| | Black spot (Alternaria kikuchiana) |
| Tea plants | Leaf spot (Pestalotia theae) |
| | Anthracnose (Colletotrichum theae-sinensis) |
| Citrus | Scab (Elisinoe fawcettii) |
| | Blue mold (Pennisillium italicum) |
| Lawn | Sclerotinis rot (Sclerotinia borealis) |

Best Modes for Carrying out the Invention

Now, the examples for the fungicidal composition according to the present invention are described below, however, the active ingredients, the additives, the adding rates and the formulation types should not be limited to the scope of the description, those which can be replaced with other substitutes over a wide range. The part indicated in the examples represents the part by weight.

(Example 1) Emulsifiable Concentrate

| | |
|---|---|
| Compound No. 1 presented in Table 1 | 10 parts |
| flusilazole | 160 parts |
| solvesso 200 | 220 parts |
| polyoxyethylene tristyrylphenyl ether | 100 parts |
| polyoxyethylene tristyryl phenyl ether sulfate | 10 parts |
| NMP (N-methyl-2-pyrrolidone) | 500 parts |
| (Example 2) Emulsifiable Concentrate | |
| Compound No. 1 presented in Table 1 | 10 parts |
| tebuconazole | 200 parts |
| solvesso 200 | 220 parts |
| polyoxyethylene tristyrylphenyl ether | 100 parts |
| polyoxyethylene tristyryl phenyl ether sulfate | 10 parts |
| NMP (N-methyl-2-pyrrolidone) | 460 parts |

Advantageous Effect of the Invention

(Test Example 1) Antifungal Test on Sugar beet Leaf Spot

Sugar beet leaf spot fungus (*Cercospora beticola*) grown beforehand on a potato agar culturing medium containing 2% saccharose was taken out by using a cork borer, and the fungus was placed onto a potato agar culturing medium containing 2% saccharose and the fungicidal composition at a prefixed concentration. After growing the fungus at 25°C under dark condition for 8 days, the diameter of the grown fungus was measured.

Effectiveness Rate (%) = [1-(Diameter of Colony in Treated Plot / Diameter of Colony in Untreated Plot)] x 100

The expectable effectiveness rate E was calculated based on Colby's equation (Weed., 15, 20-22, 1996) and was compared with the obtained results in the present test.

$$E = x + y - (X \cdot y/100)$$

E represents an expectable effectiveness rate in % when using active compounds A and B at the concentration of m and n, respectively, x represents an effectiveness rate when using the active compound A at the concentration of m, and y represents an effectiveness rate when using the active compound B at the concentration of n.

Table 2

| Active Compound | | | Actual Effectiveness Rate(%), Figures in () are Calculated Effectiveness Rate(%) | |
|---|---|---|---|---|
| | | Water (Check) | Compound No.1 in Table 1 | |
| | Concentration of Active Compound in Spray Solution (ppm) | - | 1 | 0.1 |
| Water(Check) | - | 0 | 56 | 0 |
| Thiophanatemethyl | 10 | 6 | 75(59) | 19(6) |
| Benomyl | 1 | 6 | 75(59) | 38(6) |
| Iprodione | 10 | 6 | 94(59) | 88(6) |
| Iminoctadine | 1 | 69 | 94(86) | 94(69) |
| Carboxin | 1 | 0 | 75(56) | 25(0) |
| Cyprodinil | 1 | 50 | 88(78) | 56(50) |
| Dimethomorph | 10 | 6 | 75(59) | 25(6) |
| Probenazol | 100 | 13 | 69(62) | 44(13) |
| Procymidone | 1 | 13 | 88(62) | 25(13) |
| Diethofencarb | 0.1 | 75 | 100(88) | 100(75) |
| Fosetyl | 100 | 6 | 59(56) | 25(6) |

(Test Example 2) Efficacy Test on Wheat Powdery Mildew (Field Test)

The fungicidal composition prepared according to the example 1 and example 2 was diluted at a prefixed concentration and applied once to wheat at the young shooting stage by using a sprayer with carbon dioxide pressure. On 26 days after the spray, the rate of infected leaves was examined.

The results were shown in Table 3.

Table 3

| Composition | Dose (gai/ha) | Incidence (%) |
|---|---|---|
| Compound No.1 + flucilazole | 12.5 + 200 | 2.5 |
| Compound No.1 + tebuconazole | 12.5 + 250 | 1.3 |
| Compound No.1 | 12.5 | 5.0 |
| flucilazole | 200 | 10.0 |
| tebuconazole | 250 | 6.3 |
| Untreated | 0 | 23.8 |

Industrial Use of the Invention

The combined fungicidal composition according to the present invention allows to provide higher fungicidal performance than the one given by the single application of the respective component active ingredient owing to the synergistic action.

## Claims

1. A fungicidal composition for agricultural and horticultural use **characterized by** containing as the active ingredients a benzamidoxime compound represented by a general formula (I);

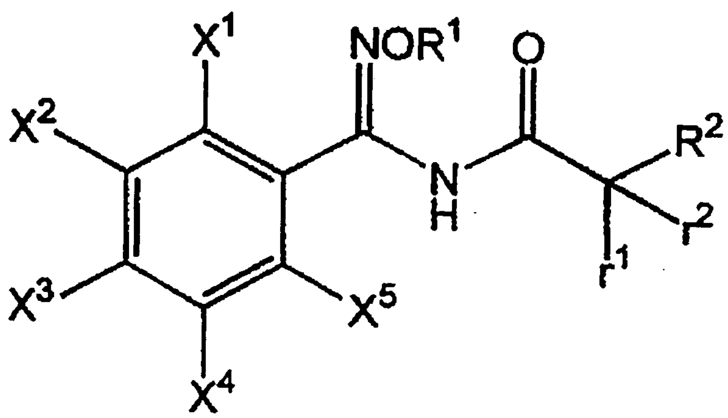

( I )

wherein $R^1$ represents halogeno, $C_{1-4}$ alkyl optionally-substituted with $C_{3-5}$ cycloalkyl, $C_{2-4}$ alkenyl optionally-substituted with halogeno or $C_{2-4}$ alkynyl optionally-substituted with halogeno,

$R^2$ represents phenyl optionally-substituted with halogeno, $C_{1-4}$ alkyl or $C_{1-4}$ alkoxy, or a heterocyclic ring optionally-substituted with halogeno, $C_{1-4}$ alkyl or $C_{1-4}$ alkoxy,

$X^1$ represents halogeno, $C_{1-4}$ haloalkyl or $C_{1-4}$ haloalkoxy,

$X^2$, $X^3$, $X^4$ and $X^5$ represent each independently hydrogen, nitro, amino, halogeno, $C_{1-4}$ alkyl, $C_{1-4}$ haloalkyl, $C_{1-4}$ alkoxy, $C_{1-4}$ haloalkoxy, $C_{1-4}$ alkylthio, $C_{1-4}$ alkylsulfinyl, $C_{1-4}$ alkylsulfonyl or $C_{1-4}$ alkylcarbonylamino,

$r^1$ und $r^2$ represent each independently hydrogen, amino, halogeno, $C_{1-4}$ alkyl, $C_{1-4}$ haloalkyl, $C_{1-4}$ alkoxy or $C_{1-4}$ alkylthio, or $r^1$ and $r^2$ may form in together a carbonyl group, and combining one or more compounds selected from the group consisting of benzoisothiazole compounds, N-phenylcarbamate compounds and organophosphorous compounds in a ratio of 1:0.01-1,000.

2. The fungicidal composition for agricultural and horticultural use according to the claim 1, **characterized in that** the benzamidoxime compound is represented by the general formula (I), wherein $R^1$ represents $C_{1-4}$ alkyl optionally-substituted by $C_{3-5}$ cycloalkyl, $R^2$ represents phenyl optionally-substituted with halogeno, $C_{1-4}$ alkyl or $C_{1-4}$ alkoxy, $X^1$ represents halogeno, $C_{1-4}$ haloalkyl or $C_{1-4}$ haloalkoxy, $X^2$, $X^3$, $X^4$ and $X^5$ represent each independently

hydrogen or halogeno, and $r^1$ and $r^2$ represent hydrogen.

**3.** The fungicidal composition for agricultural and horticultural use according to the claims 1 or 2, wherein the benzoisothiazol compound is probenazol.

**4.** The fungicidal composition for agricultural and horticultural use according to the claims 1 or 2, wherein the N-phenylcarbamate compound is diethofencarb.

**5.** The fungicidal composition for agricultural and horticultural use according to the claims 1 or 2, wherein the organophosphorous compound is fosetyl.

European Patent Office

# EUROPEAN SEARCH REPORT

Application Number
EP 04 01 1427

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E<br><br><br>A | EP 0 919 126 A (NIPPON SODA CO. LTD)<br>2 June 1999 (1999-06-02)<br>the whole document<br>& WO 97/46097 A<br>11 December 1997 (1997-12-11)<br>----- | 1-5 | A01N37/52<br>A01N55/00<br>A01N43/653 |
| A | SANO SHINSUKE ET AL: "Agricultural/horticultural antimicrobial compositions containing benzamidoximes and SH inhibitors"<br>CHEMICAL ABSTRACTS + INDEXES, AMERICAN CHEMICAL SOCIETY. COLUMBUS, US,<br>vol. 128, no. 7,<br>16 February 1998 (1998-02-16), page 71992,<br>XP002236679<br>ISSN: 0009-2258<br>the whole document<br>& AU 97297 79 A (NIPPON SODA CO. LTD.)<br>5 January 1998 (1998-01-05)<br>----- | 1-5 | |

TECHNICAL FIELDS SEARCHED (Int.Cl.7)

A01N

The present search report has been drawn up for all claims

| Place of search | Date of completion of the search | Examiner |
|---|---|---|
| The Hague | 2 June 2004 | Fort, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number

EP 04 01 1427

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

**LACK OF UNITY OF INVENTION SHEET B**

Application Number
EP 04 01 1427

The Search Division considers that the present European patent application does not comply with the requirements of unity of invention and relates to several inventions or groups of inventions, namely:

1. claims: 1-2(partially), 3

   A fungicidal composition for agricultural and horticultural use containing as the active ingredients a benzamidoxime compound of formula (I) and a benzoisothiazole compound

   ---

2. claims: 1-2(partially),4

   A fungicidal composition for agricultural and horticultural use containing as the active ingredients a benzamidoxime compound of formula (I) and a N-phenylcarbamate compound

   ---

3. claims: 1-2(partially), 5

   A fungicidal composition for agricultural and horticultural use containing as the active ingredients a benzamidoxime compound of formula (I) and an organophosphorous compound

   ---

## ANNEX TO THE EUROPEAN SEARCH REPORT ON EUROPEAN PATENT APPLICATION NO. EP 04 01 1427

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2004

| Patent document cited in search report | Publication date | Patent family member(s) | Publication date |
|---|---|---|---|
| EP 0919126 A | 02-06-1999 | AT 240039 T | 15-05-2003 |
| | | AU 2978097 A | 05-01-1998 |
| | | DE 69722005 D1 | 18-06-2003 |
| | | DE 69722005 T2 | 08-01-2004 |
| | | DK 919126 T3 | 06-10-2003 |
| | | EP 0919126 A1 | 02-06-1999 |
| | | US 6156796 A | 05-12-2000 |
| | | ES 2202618 T3 | 01-04-2004 |
| | | WO 9746097 A1 | 11-12-1997 |
| | | PT 919126 T | 30-09-2003 |
| WO 9746097 A | 11-12-1997 | AT 240039 T | 15-05-2003 |
| | | AU 2978097 A | 05-01-1998 |
| | | DE 69722005 D1 | 18-06-2003 |
| | | DE 69722005 T2 | 08-01-2004 |
| | | DK 919126 T3 | 06-10-2003 |
| | | EP 0919126 A1 | 02-06-1999 |
| | | ES 2202618 T3 | 01-04-2004 |
| | | WO 9746097 A1 | 11-12-1997 |
| | | PT 919126 T | 30-09-2003 |
| | | US 6156796 A | 05-12-2000 |
| AU 9729779 A | | NONE | |

EPO FORM P0459

For more details about this annex : see Official Journal of the European Patent Office, No. 12/82